# EUROPEAN PATENT APPLICATION

(11) **EP 4 697 143 A1**
(43) Date of publication of application: **18.02.2026**
(21) Application number: 24194101.2
(22) Date of filing: 12.08.2024
(51) Int. Cl.: G06F 3/01, G06F 3/0488, G06F 9/455

(54) **IMPROVEMENTS IN INTERACTION WITH A COMPUTER DEVICE**

(71) Applicant: AMERIA AG, 69124 Heidelberg (DE)
(72) Inventor: METTER, Albrecht, 69120 Heidelberg (DE)
(74) Representative: Best, Bastian

(57) **Abstract**

According to a first aspect of the present invention, it may be provided a touchless gesture interaction method for controlling a computer device. The method may be computer-implemented. The method may comprise providing, using a display means and at least one user input system including a touchless gesture input system, a user interface for receiving user input. The touchless gesture input system may be configured to generate control commands based on received touchless user input. The control commands may be configured for controlling the computer device. The method may comprise receiving, by the computer device, an indication indicating that a user intends to perform a task on the computer device. Performing the task may involve a sequence of steps to be performed by the computer device based on user input. The method may comprise, in response to the computer device being operated in a task training mode, obtaining, using the at least one user input system, user input configured to causing the computer device to perform at least part of the sequence of steps. The method may comprise generating, using a machine-learning model, a task automation template based on the obtained user input, wherein the task automation template is configured to emulate user input causing the computer device to complete the task and/or to perform the task at a later point in time without operating the computer device in the task training mode.

## Description

### TECHNICAL FIELD

The present disclosure generally relates to the field of human-machine interface design in computer devices, and more particularly to techniques for improving interaction with a computer device. Certain embodiments may provide for a new interaction paradigm for interacting with computer devices.

### BACKGROUND

Computer devices have become an essential part of our daily lives. One type of computing device includes portable computers also known as laptops or notebooks which provide the user with a convenient way to work, communicate, and entertain themselves on the go. Portable computers typically include a display and keyboard that are directly connected to the main case, all sharing a single power source.

Despite evolutionary developments of their design (e.g., form factor, materials) and technical features (e.g., battery life, performance), portable computers have remained essentially the same over a long time. For example, the human-machine interface of typical portable computers, which consists mainly of a keyboard and a pointing device such as a trackpad or trackpoint, have remained practically unchanged for decades. As a result, the ways how users interact with portable computers have remained relatively static, and so are the use cases in which these devices are employed nowadays.

A significant limitation of traditional human-machine interfaces, especially but not only in portable computers, is their largely typing-based approach and their reliance on physical input devices like the keyboard and trackpad. As a result, these computers are typically following the old paradigm of thinking about personal computing like using a typewriter where the computer is a tool that the user interacts with primarily by typing text, in addition to moving a mouse pointer. They fall short of providing new user interface paradigms that are ready for future mega trends and emerging use cases such as, without limitation, 3D content creation and consumption, virtual reality, the Metaverse, speech-to-text, artificial intelligence, chat bots, and gaming.

It is therefore an objective of the present disclosure to provide techniques for an improved human-machine interface for computer devices, thereby overcoming the above-mentioned disadvantages of the prior art at least in part.

### SUMMARY OF THE DISCLOSURE

The objective is solved by the subject-matter defined in the independent claims. Advantageous modifications of embodiments of the present disclosure are defined in the dependent claims as well as in the description and the figures.

According to a first aspect of the present invention, it may be provided a touchless gesture interaction method for controlling a computer device. The method may be computer-implemented. The method may comprise providing, using a display means and at least one user input system including a touchless gesture input system, a user interface for receiving user input. The touchless gesture input system may be configured to generate control commands based on received touchless user input. The control commands may be configured for controlling the computer device. The method may comprise receiving, by the computer device, an indication indicating that a user intends to perform a task on the computer device. Performing the task may involve a sequence of steps to be performed by the computer device based on user input. The method may comprise, in response to the computer device being operated in a task training mode, obtaining, using the at least one user input system, user input configured to causing the computer device to perform at least part of the sequence of steps. The method may comprise generating, using a machine-learning model, a task automation template based on the obtained user input, wherein the task automation template is configured to emulate user input causing the computer device to complete the task and/or to perform the task at a later point in time without operating the computer device in the task training mode.

Throughout the present disclosure, the term "computer-implemented method" may refer to a method executed by a computer device or system, typically involving software instructions. Throughout the present disclosure, the term "computer device" may refer to any electronic device capable of processing data and executing instructions. Computer devices may come in many forms, including desktop computers, laptops, tablets, and smartphones. Also, other types of devices such as television sets, in particular so-called smart TVs, set-top-boxes and gaming devices, also referred to as gaming consoles, are examples of computer devices. Furthermore, any type of other physical apparatus with at least some computing functionality may be referred to as a computer device, such as without limitation a computer device which is built into another higher-level electronic device such as a Virtual Reality device, a car, a vehicle and/or the like. Generally speaking, a computer device typically includes at least one central processing unit (CPU), at least one memory component, one or more input/output devices, and possibly various other components.

Said at least one central processing unit (CPU), at least one memory component and one or more input/output devices may function as follows: The CPU may be the central processing unit of the computer device and may be responsible for performing all the instructions and calculations that the device needs to execute. It may be essentially the "brain" of the computer device, and it may interpret and execute commands/instructions provided to it by a user or a device's software. The memory component of a computer device may be responsible for storing data and instructions that are required for the device's operation. This memory may be divided into two categories: temporary and permanent. Temporary memory may be used to store data that is needed only for a short period, while permanent memory may be used for long-term storage. Input/output devices may be used to interact with the computer device. Common input devices include mouses, trackpads, trackpoints, keyboards, touchbars and touchscreens, while common output devices include monitors, speakers, and printers. These devices allow the user to input data and commands into the device and receive output from the device. Various other components may be included in a computer device, such as graphics processing units, network interface cards, and storage devices like hard drives and solid-state drives. These components help to expand the capabilities of the device and allow it to perform more complex tasks. In summary, a computer device is an electronic device that is specifically designed to execute various computing tasks. It comprises components that are necessary for its operation.

Throughout the present disclosure, the term "touchless gesture interaction" may refer to user interactions with a computer device that do not require physical contact with the device, typically involving gestures detected by the touchless gesture input system which may include, for this purpose, sensor means, in particular cameras. Thus, throughout the present disclosure, the term "touchless gesture input system" may be used as a synonym for the term "touchless interaction system". This may include systems that detect and interpret user gestures without requiring physical contact, using technologies such as infrared sensors, cameras, and/or ultrasonic sensors.

Touchless interaction may be facilitated through the use of sensor means that detect and interpret user movements and gestures. The sensor means may capture data related to the user's physical actions, which is then processed to generate corresponding virtual actions.

Thus, the touchless interaction system, i.e., touchless user input system may refer to a hardware and software combination that enables an electronic device to recognize and interpret physical gestures carried out by a user without direct touch. This system may include, for example, cameras, infrared sensors, and other types of motion detection sensors that are capable of detecting the movement of a user's body part in free space.

For that, the touchless interaction system preferably includes or consists of sensor means. The sensor means may include one or more sensor devices. Groups of the one or more sensor devices may build a sensor array. An exemplary sensor means may comprise at least two sensor arrays, each sensor array including at least two sensor devices. The sensor devices may be devices capable of capturing sensor data, e.g., imaging data, but may also refer to supporting devices which support other sensor devices in enhancing the precision of capturing sensor data, e.g., an infrared projector. For example, one sensor array may include two infrared cameras and one infrared laser projector, thus the sensor array comprising three sensor devices in total. Further, it may be included a 2D RGB camera for adding color information to the sensor data. It may be provided that 3D image data obtained by 3D camera(s) are combined by 2D RGB image data obtained by a 2D RGB camera.

The sensor means may in particular be 3D imaging sensor means which may include sensor devices that are, alone or in combination with other sensor devices, capable of capturing three-dimensional images of an environment, in particular of objects such as a user's hand being the physical input object. There are several different types of 3D imaging sensor means, including time-of-flight (TOF) sensors, structured light sensors, and stereo vision sensors. TOF sensors work by emitting a light pulse and measuring the time it takes for the light to bounce back from an object, enabling them to create a three-dimensional map of the object's shape and distance. One example for said TOF sensors is a LiDAR sensor. Structured light sensors use a pattern of light and shadow, e.g., a projected pattern projected by a laser projector, and at least one camera to create a three-dimensional map of an object. Stereo vision sensors use at least two cameras to create a three-dimensional image by comparing the images captured by each camera. The cameras may for example be infrared cameras. The projector may for example be an infrared laser projector. Preferably, a projector is configured to emit light having a wavelength which is outside the human visible areas of wavelengths, thus not disturbing the user. Using a projector projecting a pattern generally increases the accuracy of captured sensor data.

The touchless interaction system may be configured to observe an interaction space comprising or being a 3D space in the nearfield of the electronic device in which the user may provide interaction input, i.e., free-space hand movement. The space may be a space between the user and the electronic device, in particular the display means. Generally, the interaction space may be within or equal to the field of view of the sensor means. The interaction space may have a spatial orientation and/or location that is particularly convenient for the user person for providing touchless interaction, i.e., free-space hand movements. It may be provided that the user is provided with a control option to adjust the spatial orientation and/or location of the interaction space.

The touchless interaction system may receive, in particular from sensor means, sensor data, i.e., data collected by sensor means. The sensor means may preferably include at least one imaging sensor device, as mentioned above, thus in this case, the sensor data includes image data. In a preferred embodiment, the sensor means is configured to capture a 3D image of an interaction space. The 3D image may be generated based on layering various sensor data from different sensor devices. In particular, the sensor means may include a depth sensor, such as at least one infrared sensor, facilitating creation of the 3D image. Said captured sensor data may be processed by the electronic device or computer device in order to generate the virtual representation behaving corresponding to the physical input object which may be the user's hand observed by the touchless interaction system.

Sensor means, in a preferred embodiment, may include at least one 3D camera providing the point cloud and/or voxel cloud and may include at least one 2D color camera, in particular 2D RGB camera, for adding color information to the point cloud and/or voxel cloud.

Throughout the present disclosure, the term "display means" may refer to any device or component capable of visually presenting information, such as a monitor, screen, or projector. Specific examples may include LCD screens, LED displays, or holographic projectors.

Throughout the present disclosure, the term "user input system" may refer to any combination of hardware and software that allows a user to provide input to a computer device, including but not limited to above-mentioned touchless gesture input systems, keyboards, mice, and voice recognition systems.

Throughout the present disclosure, the term "control commands" may refer to instructions generated by the user input system, preferably by the touchless gesture input system, that direct the computer device to perform specific actions. Examples of control commands may include opening applications, navigating menus, or executing specific functions within software.

Throughout the present disclosure, the term "task" may refer to any operation or series of operations that a user intends to perform on a computer device, which may involve multiple steps, i.e., a sequence of steps. Throughout the present disclosure, the term "sequence of steps" may refer to a series of actions or operations that need to be performed to complete a task. Preferably, the sequence of steps need to be performed in a specific order in order to complete a task. Examples of sequences of steps may include navigating through a series of menus, entering data into forms, and/or executing a series of commands.

Throughout the present disclosure, the term "task training mode" may refer to a mode of operation in which the computer device records user input and actions to learn how to perform a task.

Throughout the present disclosure, the term "machine-learning model" may include algorithms and statistical models that enable a computer device to perform tasks without using explicit instructions, relying on patterns and inference instead.

Throughout the present disclosure, the term "task automation template" may refer to a predefined set of instructions generated by a machine-learning model that allows a computer device to perform a task automatically. The set of instructions may correspond to the sequence of steps.

Throughout the present disclosure, the term "indication" may refer to a signal or piece of information that signifies a user's intention to perform a task on the computer device. Examples of indications may include gestures, voice commands, and/or other forms of user input.

Throughout the present disclosure, the term "emulate" may refer to the process of mimicking and/or replicating user input to achieve the same outcome as if the user were performing the actions themselves. Examples of emulation may include generating synthetic mouse clicks or keystrokes based on recorded user input.

Throughout the present disclosure, the term "at a later point in time" may refer to a future moment when the task is executed automatically by the computer device without requiring the user to manually initiate the task. Examples of performing tasks at a later point in time may include scheduling a task to run at a specific time or triggering a task based on certain conditions being met.

Throughout the present disclosure, the expression "complete a task" should be understood as finishing missing required actions or steps necessary to achieve a specific goal or outcome on the computer device. This may include executing all commands, processing all data, and reaching the final state intended by the user. For example, completing a task may involve finishing a document, sending an email, and/or processing a transaction.

Throughout the present disclosure, the expression "performing a task" should be understood as executing the series of actions or steps involved in achieving a specific goal or outcome on the computer device. This may include initiating the task, carrying out intermediate steps, and progressing towards task completion. For example, performing a task may involve opening an application, entering data, and saving the results.

The touchless gesture interaction method of the present disclosure provides a more intuitive and natural way for users to interact with computer devices, reducing the need for physical contact while significantly increasing productivity due to the automation of tasks. Allowing for the automation of complex tasks saves time and effort for users by enabling the computer device to perform tasks with less or essentially without manual input.

A further technical advantage may be that the use of a machine-learning model allows the system to adapt and improve over time, providing more accurate and efficient task automation templates. In particular, the machine-learning model may involve a fine-tuning mechanism enabling the computer device to adapt to the user's needs. The machine-learning model may be realized using a conversational Al system that seamlessly integrates natural language understanding, context management, and task execution. The system may leverage a large language model (LLM) to engage in meaningful user interactions and/or perform tasks on behalf of the user, enhancing user experience and efficiency. While conventional conversational Al systems have primarily focused on generating responses to user inputs without actively participating in task execution, aspects of the present disclosure may provide an Al system that not only understands natural language but also possesses the capability to execute tasks, thereby providing users with a comprehensive virtual assistant. In other words, the Al system of aspects of the present disclosure may comprise two functionalities: conversational user interaction and task execution, which will be described in more detail in the following.

The conversational user interaction functionality may utilize a pre-trained language model, such as a transformer-based architecture, to engage in natural conversations with users. This may involve a sequence of stages comprising one or more of:
- Data Collection and Preprocessing: A diverse dataset of conversations may be collected and preprocessed by tokenizing text into units for effective model training.
- Model Training and Fine-Tuning: The language model may undergo supervised fine-tuning on specific conversational tasks, enabling it to generate contextually relevant responses to user inputs.
- Context Management: The system may implement context handling mechanisms to comprehend ongoing conversation context, contributing to coherent and engaging dialogues.
- Response Generation: Techniques like beam search or sampling may be employed to generate diverse and coherent responses.

The task execution functionality may expand beyond conversation by equipping the Al system to execute tasks on behalf of users. This may involve one or more of:
- Intent Recognition and Context Understanding: The system may enhance its natural language processing capabilities to accurately recognize user intents and extract task-related details from conversations.
- Task Knowledge Base: A repository of tasks may be created, encompassing instructions, steps, and/or parameters required for task execution.
- Execution Logic: Logical frameworks may be established to map user intents to specific tasks, defining the sequence of actions for successful task completion.
- User Interaction Flow: The system may engage users in a natural interaction flow, seeking input, confirming tasks, and/or providing updates on task progress.
- Error Handling and Security: The system may implement error handling mechanisms, may seek user confirmation for critical tasks, and/or may ensure secure handling of sensitive information.
- Feedback Loop: User feedback may be collected to refine task execution over time, resulting in continuous improvement.

The above-described conversational Al system offers a comprehensive solution that seamlessly integrates user interaction and task execution. By utilizing a pre-trained language model, the system provides contextually relevant responses while extending its capabilities to execute diverse tasks. This holistic approach enhances user experience, efficiency, and productivity, positioning the system as an innovative solution in the field of conversational Al. This truly revolutionizes user interaction by delivering a versatile virtual assistant capable of engaging in meaningful conversations and effectively performing tasks on behalf of the user.

The above aspects relating to the task orchestration may be realized using any of the functionalities disclosed in European patent application no. 23193281.5 titled "ADAPTABLE VIRTUALIZED HUMAN-MACHINE INTERFACE FOR A PORTABLE COMPUTER", the contents of which are incorporated herein by reference.

Further, the method may enhance accessibility for users with physical disabilities, as it does not require physical interaction with the device. Moreover, the task training mode may provide a flexible way for users to teach the computer device new tasks, allowing for customization and personalization of the device's functionality. The method may also improve user productivity by enabling the computer device to perform repetitive tasks automatically, freeing up users to focus on more complex and creative activities. Furthermore, the use of touchless gesture input systems may reduce wear and tear on physical input devices, potentially extending the lifespan of the computer device. The method may also enhance the user experience by providing a seamless and responsive interface that quickly interprets and responds to user gestures.

It may be provided that the task automation template is configured to access at least one data file and at least one application available on the computer device. It may be further provided that the at least one data file and the at least one application is used to complete the task and/or to perform the task. It may be further provided that the at least one data file may be stored on the computer device and/or on a cloud storage and/or on an external storage medium being connected and/or communicatively coupled to the computer device.

Throughout the present disclosure, the term "data file" may refer to any file that contains data which can be used by the computer device to perform tasks. Examples of data files may include text documents, spreadsheets, images, videos, and databases.

Throughout the present disclosure, the term "application" may refer to any software program that can be executed on the computer device to perform specific functions. Examples of applications may include word processors, web browsers, email clients, and specialized software for tasks such as graphic design or data analysis.

Throughout the present disclosure, the expression "cloud storage" should be understood as a service that allows data to be stored on remote servers accessed from the internet, rather than on the local computer device. Examples of cloud storage services may include Google Drive, Dropbox, and Microsoft Sharepoint.

Throughout the present disclosure, the term "external storage medium" may refer to any physical device that can store data and be connected to the computer device. Examples of external storage media may include USB flash drives, external hard drives, and SD cards.

Throughout the present disclosure, the expression "communicatively coupled" should be understood as a state in which two devices are connected in such a way that they can exchange data. This may include wired connections, such as USB or Ethernet, as well as wireless connections, such as Wi-Fi or Bluetooth.

One technical advantage of configuring the task automation template to access at least one data file and at least one application may be that it allows for more comprehensive and versatile task automation, enabling the computer device to handle a wider range of tasks. Another technical advantage may be that accessing data files and applications directly can streamline the task completion process, reducing the need for user intervention and improving efficiency. A further technical advantage may be that storing data files on various storage mediums, including cloud storage and external storage, provides flexibility and ensures that the necessary data is always accessible, regardless of the device's location or connectivity. Additionally, the ability to use data files and applications stored on external storage media may enhance the portability of the system, allowing users to carry their data and applications with them and use them on different computer devices.

Moreover, the use of cloud storage may provide additional security and redundancy, as data stored in the cloud is often backed up and protected against hardware failures. The method may also improve user productivity by enabling the computer device to automatically access and use the necessary data files and applications to complete tasks, freeing up users to focus on more complex activities. Furthermore, the ability to access data files and applications stored on external storage media may reduce the storage burden on the computer device itself, potentially improving its performance and longevity.

The method may also enhance the user experience by providing a seamless and responsive interface that quickly accesses and utilizes the necessary resources to perform tasks.

It may be provided that in the course of interaction, a virtual 3D object and/or virtual 3D control elements are displayed in 3D, in particular as a holographic image, optionally wherein the computer device comprises eye tracking cameras facilitating displaying the virtual 3D object in 3D, in particular as a holographic image. Throughout the present disclosure, the term "displayed in 3D" may refer to the presentation of an object in three dimensions, providing depth perception and spatial awareness. Specific examples may include stereoscopic displays, virtual reality headsets, and holographic projections. For that, autostereoscopy may be used. Autostereoscopy includes any technology of displaying stereoscopic images (adding binocular perception of 3D depth) without the use of special headgear, glasses, something that affects vision, or anything for eyes on the part of the viewer. Because headgear is not required, it is also called "glasses-free 3D" or "glassesless 3D". There are two broad approaches currently used to accommodate motion parallax and wider viewing angles: eye-tracking, and multiple views so that the display does not need to sense where the viewer's eyes are located. Examples of autostereoscopic displays technology include lenticular lens, parallax barrier, and may include Integral imaging, but notably do not include volumetric display or holographic displays. Throughout the present disclosure, the term "eye tracking cameras" may refer to cameras or sensors capable of detecting and monitoring the movement and position of a user's eyes. The information obtained by said eye tracking cameras may be used, e.g., for performing autostereostcopy.

Overall, displaying in 3D may provide users with a more immersive and realistic representation of the object, enhancing their perception of depth and spatial relationships. By offering a three-dimensional view, the method may improve the user's ability to understand and interact with the virtual object, making the experience more engaging and intuitive.

It may be provided that at least two applications and/or at least two data files are used for completing and/or performing the task.

Using at least two applications and/or at least two data files for completing and/or performing the task allows for more complex and multifaceted task automation, enabling the computer device to handle tasks that require multiple resources. Further, the method can thereby integrate data from multiple sources, providing a more comprehensive and accurate outcome for the task being performed. The method may also enhance the scalability of the system, allowing it to handle more complex tasks as additional applications and data files are added.

It may be provided that the at least one data file being used for completing and/or performing the task is a copy of a corresponding at least one original data file. It may be further provided that the corresponding at least one original data file is kept unchanged when completing and/or performing the task. It may be provided that the method includes creating the respective copy of the at least one original data file and thereby receiving the at least one data file to be used.

Throughout the present disclosure, the term "original data file" may refer to the initial version of a data file that exists before any modifications or operations are performed on it. Examples of original data files may include the master copy of a document, an unedited image, or the primary version of a database.

Throughout the present disclosure, the term "copy" may refer to a duplicate version of the original data file that can be used for operations without affecting the original. Examples of copies may include a duplicated document, a cloned image, or a replicated database.

One technical advantage of using a copy of the original data file for completing and/or performing the task may be that it ensures the integrity and preservation of the original data file, preventing any unintended modifications or loss of data. Another technical advantage may be that creating and using a copy allows for safe experimentation and testing, as any changes made during task performance do not affect the original data file. A further technical advantage may be that the method provides a layer of redundancy, ensuring that the original data file remains available and unaltered, which can be crucial for data recovery and auditing purposes. Additionally, the ability to use a copy of the original data file may enhance the flexibility of the system, allowing users to perform multiple tasks simultaneously on different copies without risking data corruption. Moreover, the method may improve user confidence and trust in the system, as users can be assured that their original data files will remain unchanged and intact. The method may also enhance the efficiency of task performance, as operations can be performed on the copy without the need to lock or restrict access to the original data file. Furthermore, creating a copy of the original data file may facilitate version control and tracking, allowing users to maintain a history of changes and revert to previous versions if necessary. The method may also provide a safeguard against accidental deletions or modifications, as the original data file remains untouched and can be restored if needed.

It may be provided that the at least one original data file is replaced by the at least one data file upon confirmation of the user after completing and/or performing the task involving a change in the at least one data file.

Throughout the present disclosure, the term "replaced" may refer to the process of substituting the original data file with the modified data file after the task is completed and user confirmation is received. This may involve overwriting the original data file with the new version.

Throughout the present disclosure, the term "confirmation of the user" may refer to an explicit approval or authorization given by the user to proceed with replacing the original data file. This may include actions such as clicking a confirmation button, selecting an option in a dialog box, or providing a verbal command.

Replacing the original data file with the modified data file upon user confirmation may ensure that changes are only committed when the user explicitly approves them, reducing the risk of unintended data loss or corruption. Further, it is thereby provided a safeguard against accidental modifications, as the original data file remains unchanged until the user confirms the replacement. The method may also enhance the user experience by providing a clear and intuitive process for managing data file changes, reducing the likelihood of confusion or errors. Furthermore, the confirmation step may serve as a checkpoint, ensuring that all necessary steps have been completed and that the task has been performed as intended before finalizing the changes.

It may be provided that completing and/or performing the task is performed in a sandbox environment provided by the computer device.

Throughout the present disclosure, the term "sandbox environment" may refer to a controlled and isolated environment within the computer device where tasks can be executed without affecting the rest of the system. This environment may be used to test and run applications or processes securely. Examples of sandbox environments may include virtual machines, containers, or specialized software environments that restrict access to system resources.

One technical advantage of performing tasks in a sandbox environment may be that it provides a secure and controlled setting for executing tasks, reducing the risk of system-wide issues or security breaches. Another technical advantage may be that the sandbox environment allows for safe testing and experimentation, as any changes or errors are contained within the sandbox and do not affect the main system. A further technical advantage may be that using a sandbox environment can enhance the stability and reliability of the computer device, as tasks are isolated from the main operating system and other applications. Additionally, the method may improve user confidence and trust in the system, as users can be assured that their main system and data are protected from potential harm caused by executing tasks. Moreover, the sandbox environment may facilitate debugging and troubleshooting, as issues can be identified and resolved within the isolated environment without impacting the main system. The method may also enhance the flexibility and adaptability of the system, allowing users to run potentially risky or untrusted tasks in a safe manner. Furthermore, performing tasks in a sandbox environment may provide a layer of redundancy, ensuring that the main system remains operational even if issues arise within the sandbox. The method may also improve user productivity by allowing tasks to be performed concurrently in the sandbox environment, freeing up the main system for other activities.

It may be provided that the machine-learning model runs locally on the computer device.

Throughout the present disclosure, the term "runs locally" may refer to the execution of the machine-learning model directly on the computer device, without relying on external servers or cloud-based resources. This may involve utilizing the computer device's own processing power, memory, and storage to perform the necessary computations.

One technical advantage of running the machine-learning model locally on the computer device may be that it reduces latency, as data does not need to be transmitted to and from external servers, resulting in faster processing and response times. Another technical advantage may be that running the model locally enhances data privacy and security, as sensitive data remains on the computer device and is not exposed to potential risks associated with external data transmission. A further technical advantage may be that the method provides greater control over the machine-learning model, allowing for customization and optimization based on the specific capabilities and requirements of the computer device. Additionally, running the machine-learning model locally may reduce dependency on internet connectivity, ensuring that the system can function effectively even in offline or low-connectivity environments. Moreover, the method may improve the efficiency and performance of the computer device, as local execution can leverage the full computational resources of the device without the overhead of network communication. The method may also enhance user confidence and trust in the system, as users can be assured that their data and computations are handled securely and privately on their own device. Furthermore, running the machine-learning model locally may facilitate real-time processing and decision-making, enabling the computer device to respond quickly and accurately to user input and environmental changes. The method may also provide a layer of redundancy, ensuring that the machine-learning capabilities remain available even if external servers or cloud services are temporarily unavailable. Lastly, the flexibility of running the machine-learning model locally may provide convenience for users, allowing them to manage and execute machine-learning tasks more effectively based on their specific needs and preferences.

It may be provided that the user input is received at least partially in natural language. It may be provided that the user input is received by means of a natural language processing unit of the computer device. It may be provided that the user input is received using a microphone and/or a keyboard.

Throughout the present disclosure, the term "natural language" may refer to human languages that are spoken, written, or signed, such as English, Spanish, German, etc., as opposed to computer programming languages. Examples of natural language input may include spoken commands, typed text, or written instructions.

Throughout the present disclosure, the term "natural language processing unit" may refer to a component or system within the computer device that is capable of interpreting and understanding natural language input. This may include software and hardware designed to process and analyze natural language. Examples of natural language processing units may include speech recognition systems, text analysis tools, and language understanding models.

Throughout the present disclosure, the term "microphone" may refer to an input device that captures audio signals, allowing the computer device to receive spoken user input. Examples of microphones may include built-in microphones in laptops and smartphones, external USB microphones, and headset microphones.

Throughout the present disclosure, the term "keyboard" may refer to an input device that allows the user to enter text and commands by pressing keys. Examples of keyboards may include physical keyboards, virtual on-screen keyboards, and specialized input devices for accessibility.

The ability of receiving user input at least partially in natural language provides a more intuitive and user-friendly interface, allowing users to interact with the computer device using everyday language. Further, natural language input can enhance accessibility, making it easier for users with disabilities or limited technical knowledge to operate the computer device. A further technical advantage may be that the use of a natural language processing unit can improve the accuracy and efficiency of interpreting user commands, enabling the computer device to respond more effectively to user input. Additionally, receiving user input through a microphone may provide a hands-free interaction method, allowing users to control the computer device while performing other tasks or activities. Moreover, the method may enhance the flexibility and versatility of the system, as it can accommodate various forms of natural language input, including spoken commands and typed text. The method may also improve user productivity by enabling faster and more efficient input methods, reducing the time and effort required to perform tasks. Furthermore, the ability to receive natural language input may facilitate more complex and nuanced interactions, allowing users to provide detailed instructions and queries to the computer device. The method may also enhance the user experience by providing a seamless and responsive interface that quickly interprets and responds to natural language input.

It may be provided that, upon receiving a start trigger by the user at the later point in time, the task is completed and/or performed.

Throughout the present disclosure, the term "start trigger" may refer to an action or signal initiated by the user to commence the execution of a task. Examples of start triggers may include pressing a button, issuing a voice command, selecting an option in a software interface, or any other user-initiated action that signals the computer device to begin task execution.

The method can enhance user convenience, as tasks can be initiated with minimal effort at a time that is most suitable for the user. Further, the start trigger mechanism can improve system responsiveness, ensuring that tasks are performed promptly upon user request. Additionally, the ability to receive a start trigger may provide flexibility in task execution, allowing users to delay or reschedule tasks based on their changing needs and priorities. Moreover, the method may enhance user productivity by enabling the computer device to perform tasks at optimal times, reducing interruptions and allowing users to focus on other activities. The method may also improve the user experience by providing a seamless and intuitive interface for initiating tasks, reducing the complexity and effort required to manage task execution. Furthermore, the start trigger mechanism may provide a layer of security, as tasks are only performed upon explicit user authorization, reducing the risk of unauthorized or unintended task execution. The method may also facilitate better resource management, as tasks can be scheduled to run during periods of low system usage, optimizing the performance and efficiency of the computer device.

It may be provided that during completing and/or performing the task, at least part of the emulated user input and/or the sequence of steps performed by the computer device based on the emulated user input, is displayed in real time to the user facilitating the user to observe the completion and/or performance of the task.

One technical advantage of displaying at least part of the emulated user input and/or the sequence of steps in real time may be that it provides transparency, allowing users to observe and verify the actions being performed by the computer device. Another technical advantage may be that real-time display can enhance user confidence and trust in the system, as users can see that tasks are being executed correctly and as intended. A further technical advantage may be that the method facilitates user engagement and interaction, allowing users to monitor progress and intervene if necessary, ensuring that tasks are completed accurately. Additionally, the real-time display of emulated user input and sequence of steps may provide an educational benefit, helping users to understand the process and learn how tasks are performed by the computer device. Moreover, the method may improve troubleshooting and debugging, as users can identify and address any issues or errors that occur during task execution by observing the real-time display. The method may also enhance the user experience by providing a dynamic and responsive interface that keeps users informed about the status and progress of their tasks. Furthermore, displaying the emulated user input and sequence of steps in real time may provide a layer of security, as users can detect and respond to any unauthorized or unexpected actions being performed by the computer device. The method may also facilitate better resource management, as users can monitor the system's performance and make adjustments as needed based on the real-time display.

The method may comprise providing the user with at least one control element for getting involved in the completion and/or performance of the task. It may be further provided that using the at least one control element may cause an interruption of the completion and/or performance of the task and/or may cause a change in the speed of the completion and/or performance of the task and/or may cause a fine tuning of the emulated user input and/or may cause a fine tuning of the sequence of steps.

Throughout the present disclosure, the term "control element" may refer to an interactive component within the user interface that allows the user to influence the execution of tasks. Examples of control elements may include buttons, sliders, checkboxes, and dropdown menus.

Throughout the present disclosure, the term "interruption" may refer to a temporary halt or pause in the execution of a task, allowing the user to intervene or make adjustments before the task continues.

Throughout the present disclosure, the term "change in the speed" may refer to the adjustment of the rate at which the task is performed, either accelerating or decelerating the execution based on user input.

Throughout the present disclosure, the term "fine tuning" may refer to making precise adjustments or modifications to the emulated user input or the sequence of steps to achieve the desired outcome. Examples of fine tuning may include altering the timing of actions, modifying input values, or reordering steps.

Providing the user with at least one control element for getting involved in the completion and/or performance of the task enhances user control and flexibility, allowing users to influence the execution of tasks based on their specific needs and preferences. Further, the ability to interrupt the task provides a safeguard against errors or unintended actions, allowing users to pause and review the task before it continues. A further technical advantage may be that the option to change the speed of task execution can improve efficiency, enabling users to accelerate tasks when time is critical or decelerate tasks for more careful observation and intervention. Additionally, the method may enhance the accuracy and precision of task execution by allowing users to fine-tune the emulated user input and sequence of steps, ensuring that the task is performed exactly as intended. Moreover, the control elements may improve user engagement and interaction, making the task execution process more dynamic and responsive to user input. The method may also enhance the user experience by providing a customizable and adaptable interface that caters to individual user preferences and requirements. Furthermore, the ability to fine-tune the emulated user input and sequence of steps may facilitate better learning and understanding, as users can experiment and adjust the task execution process to see how different inputs and steps affect the outcome. The method may also provide a layer of security, as users can intervene and make adjustments to prevent unauthorized or unexpected actions during task execution. Lastly, the flexibility of using control elements to manage the completion and/or performance of tasks may provide convenience for users, allowing them to execute tasks more effectively and efficiently based on their specific needs and preferences.

The method may comprise, in a testing mode, completing and/or performing the task experimentally. It may be further provided that in the testing mode, after performing part of the steps of the sequence of steps, the user is asked for confirmation.

Throughout the present disclosure, the term "testing mode" may refer to a mode of operation in which the task is executed in a controlled and experimental manner, allowing the user to observe and validate each step before proceeding. This mode may be used to ensure that the task is performed correctly and to identify any potential issues.

Throughout the present disclosure, the term "experimentally" may refer to the process of executing the task in a trial or test environment, allowing for observation, validation, and adjustment before final execution.

Throughout the present disclosure, the term "confirmation" may refer to an explicit approval or authorization given by the user to proceed with the next step of the task. This may include actions such as clicking a confirmation button, selecting an option in a dialog box, or providing a verbal command.

One technical advantage of completing and/or performing the task experimentally in a testing mode may be that it provides a controlled environment for validating the task execution, reducing the risk of errors and unintended consequences. Another technical advantage may be that the testing mode allows for step-by-step confirmation, ensuring that each part of the task is performed correctly before proceeding to the next step. A further technical advantage may be that the method facilitates user engagement and interaction, allowing users to actively participate in the task execution process and make adjustments as needed.

It may be provided that the task automation template is stored in an archive of task automation templates facilitating using, in particular fine tuning and using, the task automation template at the later point in time. Optionally, it may be provided that prior to storing in the archive, a classification is performed based on the obtained user input and/or based on the sequence of steps, the classification causing labelling the task automation template, e.g., as "work" or "private".

Throughout the present disclosure, the term "archive" may refer to a storage system or repository where task automation templates are saved for future use. This may include databases, file systems, or cloud storage solutions designed to organize and manage task automation templates.

Throughout the present disclosure, the term "classification" may refer to the process of categorizing task automation templates based on specific criteria derived from the obtained user input and/or the sequence of steps. Examples of classification criteria may include the nature of the task, the context in which it is performed, or the type of data involved.

Throughout the present disclosure, the term "labelling" may refer to assigning descriptive tags or identifiers to task automation templates based on their classification. Examples of labels may include categories such as "work," "private," "financial," or "personal."

One technical advantage of storing the task automation template in an archive may be that it provides a centralized and organized repository for managing task automation templates, facilitating easy retrieval and reuse. Another technical advantage may be that the archive allows for fine tuning and using the task automation template at a later point in time, enabling continuous improvement and adaptation of task automation processes. A further technical advantage may be that the classification and labeling of task automation templates can enhance organization and searchability, allowing users to quickly find and select the appropriate template for their needs. Additionally, the method may improve user productivity by enabling the reuse of previously created task automation templates, reducing the time and effort required to set up new tasks. Moreover, the ability to classify and label task automation templates may provide better context and understanding of the templates, helping users to identify the most suitable template for specific tasks. The method may also enhance the user experience by providing a structured and intuitive interface for managing task automation templates, making it easier for users to navigate and utilize the archive. Furthermore, the archive may facilitate collaboration and sharing, as users can store and access task automation templates created by others, promoting knowledge transfer and best practices. The method may also provide a layer of security, as the archive can include access controls and permissions to protect sensitive task automation templates from unauthorized use. Lastly, the flexibility of storing and classifying task automation templates in an archive may provide convenience for users, allowing them to manage and execute tasks more effectively based on their specific needs and preferences.

According to a second aspect of the present invention, it may be provided a data processing apparatus, preferably an electronic device, more preferably a computer device, more preferably a laptop device, comprising means for carrying out a method according to the first aspect of the present invention. It may be further provided that if the data processing apparatus is a laptop device, it comprises a base portion and a top portion being, preferably hingedly, connected to each other.

Throughout the present disclosure, the term "laptop device" may refer to a portable computer that typically includes a screen and a keyboard integrated into a single unit. Examples of laptop devices may include notebooks, ultrabooks, and convertible laptops. Throughout the present disclosure, the term "base portion" may refer to the lower part of a laptop device that typically contains the keyboard, touchpad, and internal components such as the motherboard and storage devices. Throughout the present disclosure, the term "top portion" may refer to the upper part of a laptop device that typically contains the display screen.

Throughout the present disclosure, the term "hingedly connected" may refer to a connection mechanism that allows the top portion and base portion of a laptop device to pivot relative to each other, enabling the device to open and close like a clamshell. Examples of hingedly connected mechanisms may include traditional laptop hinges, 360-degree hinges for convertible laptops, and detachable hinges for hybrid devices.

According to a third aspect of the present invention, it may be provided a computer program or a computer-readable medium having stored thereon a computer program, the computer program comprising instructions which, when the program is executed by a computer, preferably according to the second aspect of the present invention, cause the computer to carry out the method according to the first aspect of the present invention.

All features, technical implementation details and advantages described with respect to any one of the aspects of the present invention described herein are self-evidently mutatis mutandis applicable for any one of the other aspects of the present invention and vice versa.

As a general overview, certain aspects of the present disclosure provide an entirely new human-machine interface which follows a revolutionary new interaction paradigm. The interaction paradigm is built on the principle of automation of tasks, wherein, e.g., training the needed steps for performing or completing the task may involve the new interaction paradigm which is further disclosed in European patent application no. 23200379.8 titled "IMPROVEMENTS IN CONTENT INTERACTION ON A COMPUTING DIVICE", the contents of which are incorporated herein by reference.

An excerpt of European patent application no. 23200379.8 is given in the following, in cluding main aspects of the new interaction paradigm which essentially includes:
1. "Tell what you want" (also referred to as a content request), which allows users to communicate with their computer devices in the most intuitive way, namely by merely stating their desires.
2. "Select from proposed options" (also referred to as one or more content options), where the system responds with intelligent suggestions, simplifying the user's decision-making process and streamlining the journey to desired information or content.
3. "Fine tune", where the system gets more details about the task, e.g., including the particular steps and/or sequence of steps.
4. "Interact with the result" (also referred to as a content item), where the user engages with the resulting content item using the full spectrum of human expression, potentially including gestures (both touch-based and touchless), voice, and more. The result may be a task automation template or, when performing the task at a later point in time, the result may be the output of performing or completing the task.

This innovative approach transcends conventional user experiences. It not only enhances user satisfaction but fundamentally transforms the way humans connect with the digital world. Information retrieval becomes a fluid, personalized, and dynamic process, fostering creativity and efficiency. Importantly, aspects of the present disclosure empower users to harness their most instinctive and natural behaviors when engaging with computer devices.

With this paradigm shift, the true potential of human-computer interaction is unlocked, bridging the divide between technology and human intuition. This way, one overall objective of the present disclosure is to pave the way to a future where the computer understands its user as effortlessly as a trusted companion and where technology harmonizes seamlessly with the user's innate abilities.

The user interaction, e.g., for creating the task automation template, may include a step of receiving a first user input from a user. The first user input may comprise a content request. The method may comprise a step of providing one or more content options associated with the content request to the user. The method may comprise a step of receiving a second user input from the user. The second user input may indicate a selection from the one or more content options. The method may comprise a step of providing a content item associated with the selected content option on a display of the data processing apparatus. The method may comprise a step of receiving a third user input from the user. The third user input may cause an interaction with the content item on the display. The method may comprise, prior to the receiving of the first user input: displaying a window on the display including a natural language text input field. The window may include an avatar configured to move and/or behave essentially naturally, i.e., mimicking a human, optionally the avatar asking the user to provide the first user input. Further, the method may comprise providing one or more options of entering the first user input, including text format by typing and/or entering voice commands, preferably triggered by pressing and holding a button, in particular a touch button on the touchscreen as described in more detail below. The step of receiving may be performed in accordance with a selected one of the one or more options of entering first user input. The method may comprise, optionally, after receiving the first user input: output, preferably in text or audio format, the first user input as it was understood by the system. to the user. The user may confirm by pressing a button or providing voice input indicating a confirmation. The method may comprise disappearing of the window in response to the receiving. Further, the method may comprise re-appearing of the window after the system is ready for performing the step or providing the one or more content options. The step of providing one or more content options may accordingly be performed thereafter.

Providing one or more content options may involve providing 3 or less, or 2 or less content options. It was found that too many content options confuse users. An optimum number of content options may be 3.

The method may comprise, after the providing of one or more content options: providing, preferably displaying, the one or more content options on a touchscreen, preferably the touchscreen being separate from the display, more particularly a touchscreen arranged on a user-facing surface of a base housing of the data processing apparatus when the data processing apparatus is a portable computer.

The method may comprise: outputting, preferably displaying, to the user a flowchart diagram of the steps that were performed by the system, optionally including information about the applications and/or data files used. The data files may be data files stored on the computer device and/or stored in a cloud storage and/or stored on a external storage which is communicatively connected or coupled to the computer device. Applications and data files may be displayed separately, in particular in visually distinct areas of the display means. The flowchart diagram may be displayed separately from the used applications and/or data files, in particular in a visually distinct area of the display means

Looking first at the "Tell what you want" part of the new interaction paradigm, the content request may be in natural language. Accordingly, users are allowed to express their intent, i.e., a content request, completely naturally and/or in a conversational manner. This aspect provides various advantages. First of all, it improves user engagement and reduces the learning curve for interacting with the computer system. The user is no longer forced to learn and use machine-acceptable interactions forms, such as using specific pre-defined commands, nor is the user forced to use the data processing apparatus essentially like a typewriter anymore. Since, users do not need to learn complex commands, this reduces the cognitive load. It also accommodates users with varying levels of technical expertise and those with physical disabilities, making the interaction more inclusive.

Turning to the "Select from proposed options" part of the new interaction paradigm, the step of receiving a second user input from the user to indicate a selection from the one or more content options has its own unique advantages. One of these advantages is efficient information retrieval, since by providing users with contextually relevant options, the system significantly accelerates the process of finding desired information, reducing search times and frustration. Furthermore, in terms of personalization, the system can adapt to individual preferences and behaviors, offering suggestions tailored to each user's specific needs and interests. It also minimizes the risk of misunderstandings or misinterpretations by presenting curated options related to the user's content request.

Further turning to the "fin tuning" part of the new interaction paradigm, the user is facilitated to provide additional user input and/or information in order to clarify the task.

Further turning to the "Interact with the result" part of the new interaction paradigm, the step of receiving a third user input to cause an interaction with the content item on the display also has its own unique advantages. First of all, it provides a particularly seamless transition, since users can seamlessly transition from expressing their content request to interacting with the resulting content, reducing friction in the interaction process. It also facilitates customized interaction, as users can engage in various ways with the content, such as reading, editing, playing, sharing, or taking further actions, making the interaction highly adaptable to different scenarios. By providing users with the content they desired and enabling immediate interaction, this step also leads to increased user satisfaction.

Overall, the new interaction paradigm also leads to a demonstrable reduction in the time required to perform specific tasks or retrieve information from a computer system. For instance, if user requests are processed more efficiently, leading to faster responses, this results in a reduction in processing time. The new interaction paradigm also optimizes the allocation of computational resources within the computer system. For example, by better predicting user intent and delivering relevant content options, it reduces unnecessary data processing and thereby conserves system resources. The new interaction paradigm also allows the computer system to handle a higher volume of user interactions or requests simultaneously, leading to an increased throughput.

### BRIEF DESCRIPTION OF THE DRAWINGS

The disclosure may be better understood by reference to the following drawings:
- Fig. 1:: An exemplary flowchart of a method in accordance with embodiments of the present disclosure.
- Fig. 2:: A perspective view of a computer device in accordance with embodiments of the present disclosure.
- Fig. 3:: An exemplary scene showing an overview after completion and/or performance of a task in accordance with embodiments of the present disclosure.
- Fig. 4:: A portion of the exemplary scene showing an overview after completion and/or performance of a task in accordance with embodiments of the present disclosure.
- Fig. 5:: A portion of the exemplary scene showing an overview after completion and/or performance of a task in accordance with embodiments of the present disclosure.
- Fig. 6:: A portion of the exemplary scene showing an overview after completion and/or performance of a task in accordance with embodiments of the present disclosure.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

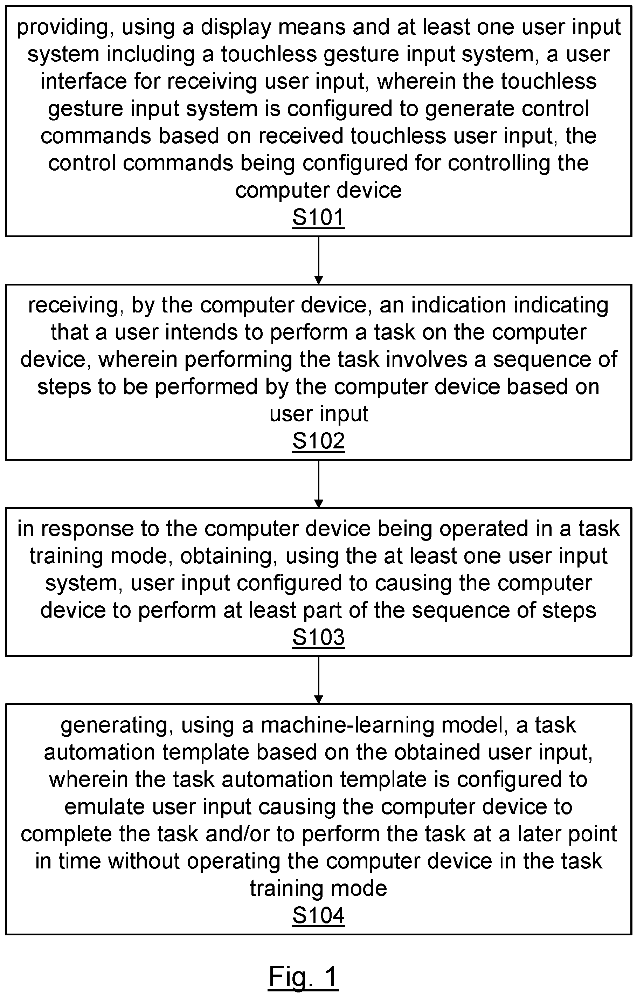

Figure 1 shows a flowchart in accordance with embodiments of the present disclosure. The flowchart includes several steps S101-S104. S101 includes providing, using a display means 108 and at least one user input system including a touchless gesture input system 110, a user interface for receiving user input, wherein the touchless gesture input system 110 is configured to generate control commands based on received touchless user input, the control commands being configured for controlling the computer device 100. Step S102 includes receiving, by the computer device 100, an indication indicating that a user intends to perform a task on the computer device 100, wherein performing the task involves a sequence of steps to be performed by the computer device 100 based on user input. Step S103 includes in response to the computer device 100 being operated in a task training mode, obtaining, using the at least one user input system, user input configured to causing the computer device 100 to perform at least part of the sequence of steps. Step 104 includes generating, using a machine-learning model, a task automation template based on the obtained user input, wherein the task automation template is configured to emulate user input causing the computer device 100 to complete the task and/or to perform the task at a later point in time without operating the computer device 100 in the task training mode.

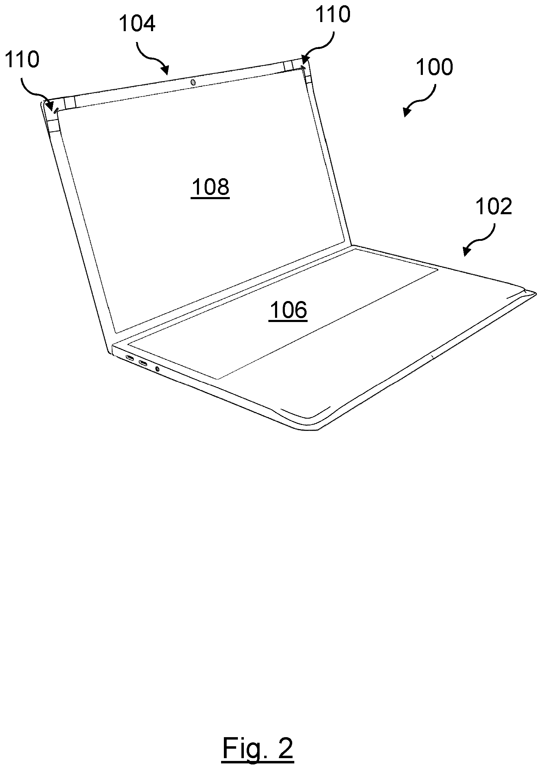

Figure 2 illustrates a perspective view of a computer device 100 in accordance with embodiments of the present disclosure. In the illustrated example, the computer device 100 is shown as a portable computer, i.e., laptop computer. It comprises a base portion 102 and a top portion 104. The portable computer is open, thereby revealing respective user-facing surfaces of the base portion 102 and top portion 104. A display means 108 is arranged on the user-facing surface of the top portion 104. A touch-sensitive control surface 106 being a second display means is arranged on the user-facing surface of the base portion 102. The portable computer comprises a touchless gesture input system 110, which comprises in the illustrated embodiment sensor means which are arranged at or near opposing upper corners of the top portion 104. However, the touchless gesture input system 110 may comprise other sensor arrangements.

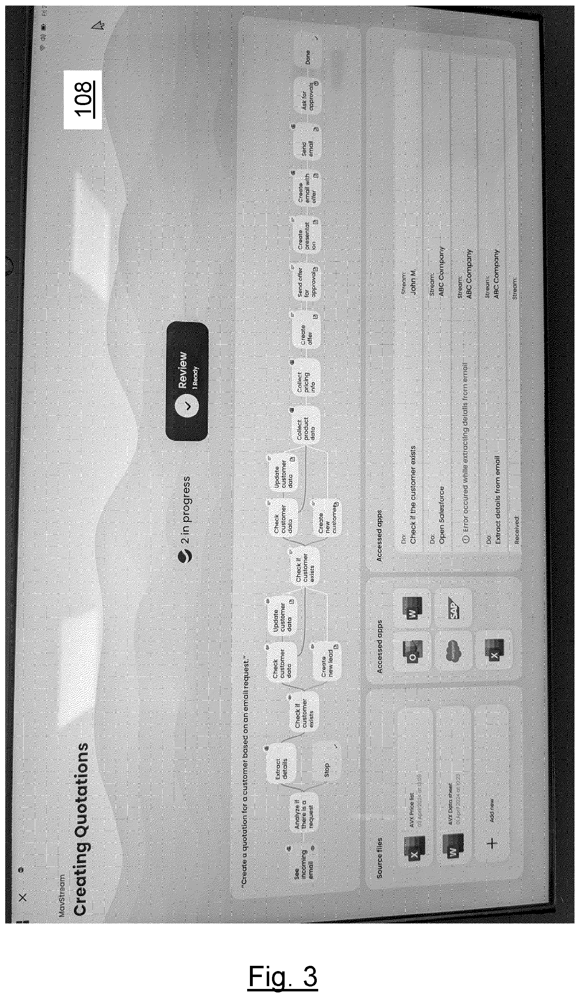

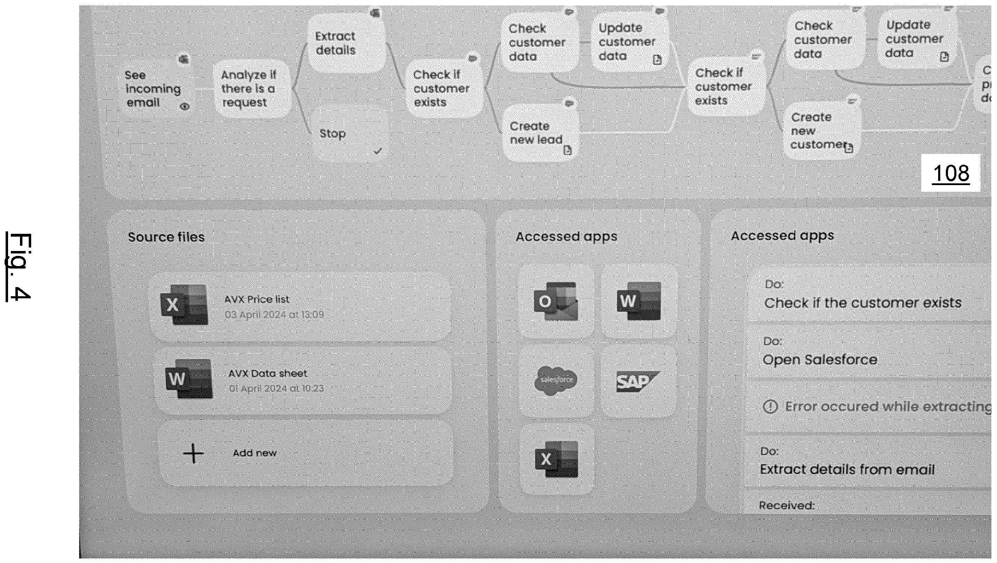

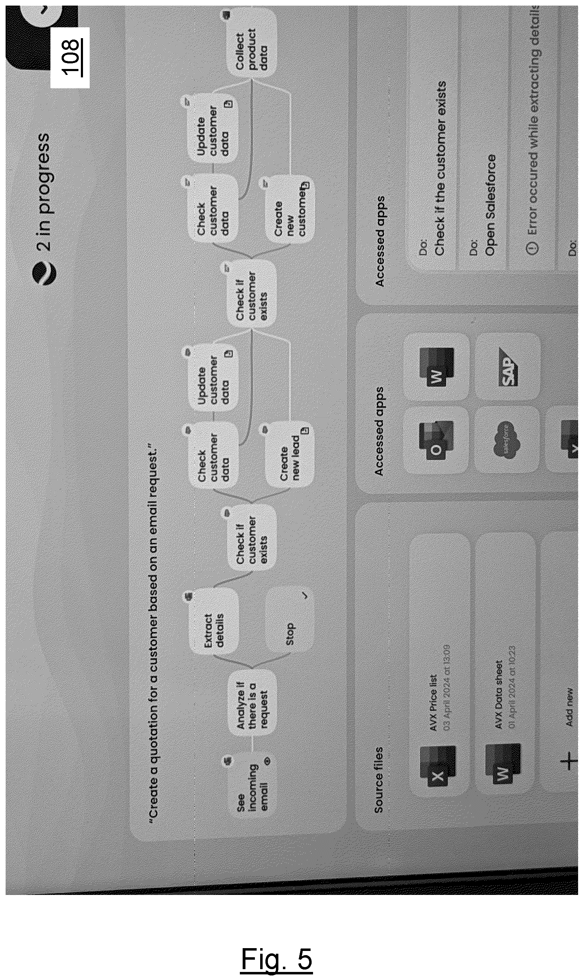

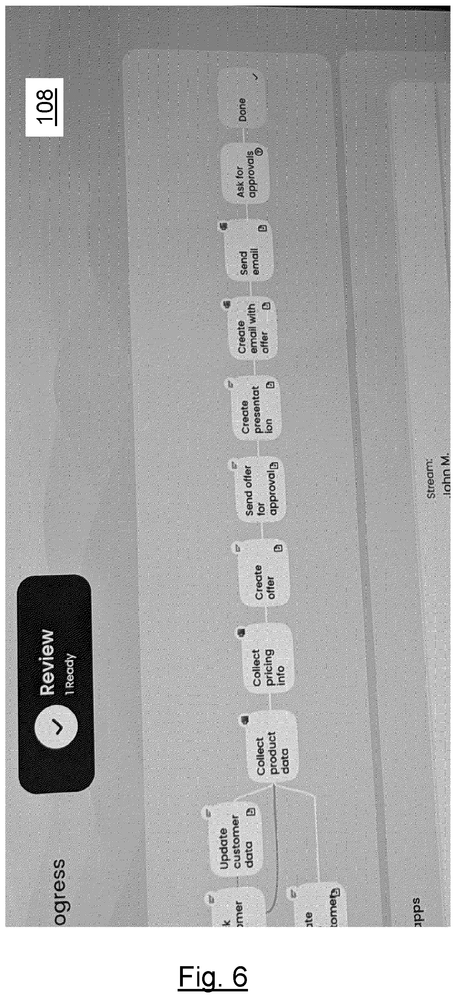

Figure 3 shows an exemplary scene showing an overview after completion and/or performance of a task in accordance with embodiments of the present disclosure. As it can be seen in figure 3, the user may receive a flowchart overview over the sequence of steps as well as an overview over the used applications and data files. Figures 4-6 are details views of said overview.

Certain embodiments of the invention may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm). Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. Reinforcement learning is a third group of machine-learning algorithms that may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

As used herein the term "and/or" includes any and all combinations of one or more of the associated listed items and may be abbreviated as "f".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A computer-implemented touchless gesture interaction method for controlling a computer device (100), the method comprising:
providing (S101), using a display means (108) and at least one user input system including a touchless gesture input system (110), a user interface for receiving user input, wherein the touchless gesture input system (110) is configured to generate control commands based on received touchless user input, the control commands being configured for controlling the computer device (100);
receiving (S102), by the computer device (100), an indication indicating that a user intends to perform a task on the computer device (100), wherein performing the task involves a sequence of steps to be performed by the computer device (100) based on user input;
in response to the computer device (100) being operated in a task training mode, obtaining (S103), using the at least one user input system, user input configured to causing the computer device (100) to perform at least part of the sequence of steps;
generating (S104), using a machine-learning model, a task automation template based on the obtained user input, wherein the task automation template is configured to emulate user input causing the computer device (100) to complete the task and/or to perform the task at a later point in time without operating the computer device (100) in the task training mode.

2. The computer-implemented method of claim 1, wherein the task automation template is configured to access at least one data file and at least one application available on the computer device (100), wherein the at least one data file and the at least one application is used to complete the task and/or to perform the task, wherein the at least one data file may be stored on the computer device (100) and/or on a cloud storage and/or on an external storage medium being connected and/or communicatively coupled to the computer device (100).

3. The computer-implemented method of claim 2, wherein at least two applications and/or at least two data files are used for completing and/or performing the task.

4. The computer-implemented method of any one of claims 2-3, wherein the at least one data filed being used for completing and/or performing the task is a copy of a corresponding at least one original data file, preferably wherein the corresponding at least one data file is kept unchanged when completing and/or performing the task, optionally, wherein the method includes creating the respective copy of the at least one original data file and thereby receiving the at least one data file to be used.

5. The computer-implemented method of claim 4, wherein the at least one original data file is replaced by the at least one data file upon confirmation of the user after completing and/or performing the task involving in a change in the at least one data file.

6. The computer-implemented method of any one of the preceding claims, wherein completing and/or performing the task is performed in a sandbox environment provided by the computer device (100).

7. The computer-implemented method of any one of the preceding claims, wherein the machine-learning model runs locally on the computer device (100).

8. The computer-implemented method of any one of the preceding claims, wherein the user input is received at least partially in natural language, optionally, by means of a natural language processing unit of the computer device (100), preferably including a microphone and/or a keyboard.

9. The computer-implemented method of any one of the preceding claims, wherein, upon receiving a start trigger by the user at the later point in time, the task is completed and/or performed.

10. The computer-implemented method of claim 9, wherein during completing and/or performing the task, at least part of the emulated user input and/or the sequence of steps performed by the computer device (100) based on the emulated user input, is displayed in real time to the user facilitating the user to observe the completion and/or performance of the task.

11. The computer-implemented method of claim 10, including providing the user with at least one control element for getting involved in the completion and/or performance of the task, wherein using the at last one control element may cause an interruption of the completion and/or performance of the task and/or may cause a chance in the speed of the completion and/or performance of the task and/or may cause a fine tuning of the emulated user input and/or may cause a fine tuning of the sequence of steps.

12. The computer-implemented method of any one of the preceding claims, further comprising, in a testing mode, completing and/or performing the task experimentally, wherein in the testing mode, after performing part of the steps of the sequence of steps, the user is asked for confirmation, optionally wherein features of claim 10 and/or 11 are included in the testing mode.

13. The computer-implemented method of any one of the preceding claims, wherein the task automation template is stored in an archive of task automation templates facilitating using, in particular fine tuning and using, the task automation template at the later point in time, optionally, wherein prior to storing in the archive, a classification is performed based on the obtained user input and/or based on the sequence of steps, the classification causing labelling the task automation template, e.g., as "work" or "private".

14. A data processing apparatus, preferably an electronic device, more preferably a computer device (100), more preferably a laptop device, comprising means for carrying out the method of any one of claims 1-13, wherein if the data processing apparatus is a laptop device, it comprises a base portion (102) and a top portion (104) being, preferably hingedly, connected to each other.

15. A computer program or a computer-readable medium having stored thereon a computer program, the computer program comprising instructions which, when the program is executed by a computer, preferably according to claim 14, cause the computer to carry out the method of any one of claims 1-13.
